# FASCICULE DE BREVET EUROPEEN

(11) **EP 1 907 511 B1**
(45) Date de publication et mention de la délivrance du brevet: **14.01.2015**
(21) Numéro de dépôt: 06778794.5
(22) Date de dépôt: 06.07.2006
(51) Int. Cl.: C10G 27/10, C10G 27/14, C02F 1/78, C02F 103/42

(54) **PROCEDE DE DEGRADATION DES HYDROCARBURES AROMATIQUES POLYCYCLIQUES UTILISANT UNE HEMOPROTEINE IMMOBILISEE**
VERFAHREN ZUM ABBAU VON POLYCYCLISCHEN AROMATISCHEN KOHLENWASSERSTOFFEN DURCH VERWENDUNG EINES IMMOBILISIERTEN HÄMOPROTEINS
METHOD FOR DEGRADING POLYCYCLIC AROMATIC HYDROCARBONS BY USING AN IMMOBILIZED HEMOPROTEIN

(30) Priorité: 08.07.2005 FR 0507302
(43) Date de publication de la demande: 09.04.2008
(73) Titulaire: TOTAL MARKETING SERVICES, 92800 Puteaux (FR); Centre National de la Recherche Scientifique, 75016 Paris (FR)
(72) Inventeur: JAMROZIK, Claude, F-66000 Perpignan (FR); THOMAS, Daniel, F-60150 Villers sur Coudun (FR); PULVIN, Sylviane, F-60200 Compiegne (FR); BEDEL-CLOUTOUR, Catherine, F-60410 Verberie (FR); GALARNEAU, Anne, F-34250 Palavlas les Flots (FR); RENARD, Gilbert, F-34270 Saint Mathieu de Treviers (FR); FAJULA, François, F-34820 Teyran (FR); BRUNEL, Daniel 175, rue Sonia Henié, F-34090 Montpellier (FR); LANGELLIER, Christophe La Hêtraie, F-76210 Nointot (FR); GILSON, Jean-Pierre, F-14610 Cairon (FR)
(74) Mandataire: Largeau, Béatrice
(86) Numéro de dépôt international: PCT/FR2006/001617
(87) Numéro de publication internationale: WO 2007/006925

(56) Documents cités:
- EP-A- 0 473 055
- US-B1- 6 461 859
- T.P. KOLOTUSHA, L.A. BELYAKOVA, V.A. TERTYKH: "Catalytic activity of hemin coordinated to silicas with various structures of grafted layers" REACT. KINET. CATAL. LETT., vol. 46, no. 1, 1992, pages 225-231, XP008065923
- R. AKASAKA, T. MASHINO, M. HIROBE: "Cytochrome P450-like substrate oxidation catalyzed by cytochrome c and immobilized cytochrome c" ARCHIVES OF BIOCHEMISTRY AND BIOPHYSICS, vol. 301, no. 2, 1993, pages 355-360, XP002387693 cité dans la demande

## Description

La présente invention concerne un procédé de dégradation de composés aromatiques polycycliques, éventuellement soufrés et/ou azotés et/ou oxygénés, par oxydation en présence d'au moins une hémoprotéine, immobilisée sur des particules minérales et choisie parmi les hémoglobines et les myoglobines, ladite oxydation aboutissant à des composés oxygénés de type aldéhyde, acide, quinone et composés hydroxylés.

Les carburants pour moteurs diesel sont constitués de divers composants dont les proportions respectives garantissent leurs performances en termes de combustion tout en respectant un ensemble de spécifications édictées par les constructeurs automobiles mais également les spécifications liées à la protection de l'environnement. Ces spécifications concernent par exemple l'indice de cétane, la tenue au froid ou les teneurs en soufre ou en hydrocarbures aromatiques polycycliques (HAP).

Les hydrocarbures aromatiques polycycliques, qui englobent également les HAP hétérocycliques soufrés, azotés ou oxygénés, tels que l'anthracène, le naphtalène, les benzothiophènes, les dibenzothiophènes, les quinoléines, les carbazoles et les acridines, sont des composés réputés dangereux pour la santé car beaucoup d'entre eux présentent un caractère cancérigène, mutagène et réprotoxique. La combustion de ces composés dans les moteurs diesel aboutit à la formation de particules de suie et de fumées noires qui sont rejetées dans l'atmosphère avec les gaz d'échappement et qui peuvent provoquer des allergies, de l'asthme, voire des cancers pulmonaires et autres effets néfastes observés dans le cadre du programme français d'étude pour l'Evaluation des Risques de la Pollution Urbaine pour la Santé (programme ERPURS).

En conséquence, pour réduire ces risques sanitaires et écologiques, la Commission Européenne a mené avec les constructeurs automobiles et les pétroliers un programme communautaire appelé « Auto Oil II » qui a permis de fixer des spécifications concernant les carburants et les émissions polluantes des automobiles pour répondre aux exigences sur la qualité de l'air à l'horizon 2010. Ainsi depuis janvier 2000, les carburants diesel sont soumis à la norme européenne EN 590 qui fixe, en accord avec la directive européenne 98/70/CE de fin 1998, la teneur maximale en HAP à 11 % en masse. Cette spécification peut, tant au niveau européen qu'au niveau international, être révisée à tout moment à la baisse et devenir une contrainte pour la fabrication des carburants diesel qui doivent cependant continuer à respecter les autres spécifications de performance imposées par les constructeurs automobiles.

Actuellement, pour éliminer ces composés aromatiques polycycliques, éventuellement soufrés et/ou azotés, les raffineurs ont recours à des unités d'hydrotraitement fonctionnant à haute pression d'hydrogène et à haute température, unités qui atteignent toutefois dans leur configuration actuelle leur limite d'efficacité. Ces unités d'hydrotraitement sont en outre de très grandes consommatrices d'énergie et d'hydrogène.

D'autre part, de nombreuses directives ont été adoptées par les états membres de la Communauté Européenne afin de mettre en place des standards de qualité de l'eau, par exemple pour l'eau potable, l'eau de baignade, l'eau piscicole et l'eau conchylicole.

Les mesures communautaires des années 80 et du début des années 90 se sont davantage basées sur le principe des valeurs limites d'émission. Le traitement des eaux urbaines résiduaires et la lutte contre la pollution par les nitrates, entre autres, en constituent des exemples.

À partir de 1995, la Communauté Européenne a commencé à adopter une approche plus globale de la gestion des eaux. Cette approche a débouché le 23 octobre 2000 sur la Directive « Cadre de l'Eau 2000/60/CE » pur une politique dans le domaine de l'eau qui vise à promouvoir l'utilisation durable des ressources en eau et à garantir la cohérence de la politique en la matière.

L'objectif de cette directive est d'établir un cadre communautaire pour la protection des eaux intérieures de surface, de transition, côtières et souterraines, en vue de prévenir et de réduire leur pollution, promouvoir leur utilisation durable, protéger leur environnement, améliorer l'état des écosystèmes aquatiques et atténuer les effets des inondations et des sécheresses.

Elle prévoit l'adoption de mesures spécifiques au niveau communautaire contre la pollution des eaux, notamment des eaux utilisées pour le captage d'eau potable, par certains polluants ou groupes de polluants présentant un risque significatif pour ou via l'environnement aquatique. Ces mesures visent à réduire progressivement, et, pour les substances particulièrement dangereuses, c'est à dire celles dont le potentiel néfaste pour l'environnement aquatique et la santé publique est clairement identifié, à arrêter ou supprimer progressivement les rejets, émissions et pertes dans un délai de 20 ans, avec le but de parvenir à des concentrations dans l'environnement aquatique proches des valeurs de base pour les substances normalement présentes dans la nature et proches de zéro pour les substances synthétiques produites par l'homme.

Ainsi, le 23 novembre 2001, le Parlement européen et le Conseil de l'Europe ont adopté la décision 2455/2001/CE (Journal Officiel L 331 du 15.12.2001), modifiant la directive 2000/60/CE en ce qu'elle définit une première liste de 33 substances ou groupes de substances polluantes prioritaires sélectionnées parmi celles qui constituent un risque important pour ou via le milieu aquatique. Cette liste de substances prioritaires est révisable tous les 4 ans et contient les Hydrocarbures Aromatiques Polycycliques (HAP), considérés comme un groupe de substances aux propriétés intrinsèquement dangereuses, c'est-à-dire toxiques, persistantes et bioaccumulables et dont le rejet, l'émission ou les fuites dans l'environnement devront être totalement supprimés d'ici 2020 ou tendre vers les seuils de base liés à la présence naturelle de celles-ci dans le milieu aquatique.

Une raffinerie est un ensemble d'unités industrielles de transformation de la matière qui, pour fonctionner, a recours au milieu naturel dont l'eau fait partie. En effet, la plupart des procédés de raffinage nécessitent de l'eau pour refroidir les produits ou leur fournir de l'énergie sous forme de vapeur. Les eaux issues de ces procédés sont collectées et traitées avant d'être rejetées dans le milieu naturel. Une raffinerie, comme toute installation industrielle, doit répondre à deux contraintes indispensables si elle souhaite s'inscrire dans un processus de production et de développement durable : elle doit répondre aux contraintes environnementales fixées par la réglementation communautaire sur l'eau et satisfaire à des objectifs de rentabilité. C'est ainsi qu'une raffinerie doit optimiser l'ensemble de ses procédés y compris et en particulier le procédé de traitement des eaux de rejet.

Actuellement l'élimination des HAP dans les eaux de rejet industrielles est réalisée dans des unités de traitement physico-chimique (extraction à la vapeur, extraction liquide/liquide dans des dessaleurs de pétroles bruts, décantation, filtration) et bactérien permettant l'élimination de la pollution organique soluble. Les rendements de ces traitements varient toutefois entre 50 et 90% et les procédés de traitement utilisant des bactéries sont assez sensibles aux variations de la composition des charges à traiter.

La directive cadre de l'eau oblige donc à trouver des procédés efficaces pour abaisser la teneur en HAP des eaux de rejet d'une raffinerie au niveau de celle du milieu naturel.

La Demanderesse s'est donc posé le problème de mettre au point un procédé biologique permettant d'éliminer efficacement et à des coûts relativement plus faibles que ceux des procédés connus, les hydrocarbures aromatiques polycycliques (HAP), éventuellement soufrés et/ou azotés et/ou oxygénés, à la fois dans des milieux liquides organiques tels que des coupes pétrolières, et dans des milieux liquides aqueux tels que les eaux de rejet industrielles.

Pour ce faire, la Demanderesse n'a pas choisi la voie de la dégradation bactérienne car les bactéries dégradent en priorité les hydrocarbures intéressants des coupes pétrolières et entraînent de ce fait une diminution indésirable de l'indice cétane. Comme indiqué ci-dessus, les procédés de dégradation bactérienne souffrent en outre d'une grande sensibilité aux variations de la composition des charges hydrocarbonées.

La voie « enzymatique » semblait par conséquent plus prometteuse. Il était en effet connu de dégrader des HAP par le peroxyde d'hydrogène ou d'autres peroxydes organiques en présence de peroxydases, telles que la peroxydase de raifort, la chloroperoxydase, la lignine peroxydase, la manganèse peroxydase, le cytochrome P₄₅₀, le cytochrome C, la peroxydase de soja, ou de protéines de transport d'oxygène telle que l'hémoglobine humaine native en présence de peroxyde d'hydrogène dans un milieu organo-aqueux (Ortiz-Leon et al., Biochem., Biophys. Res. Commun., 1995, 215, 968 et résumés dans l'article de Torres et al., Applied Catal. B : Environmental, 2003, 46, 1 où l'on peut trouver quelques publication concernant ce sujet, à savoir

Torres E., Sandoval J.V., Rosell, F.I., Mauk A.G., Vazquez-Duhalt R. (1995) "Site-directed mutagenesis improves the biocatalytic activity of iso-1-cytochrome C polycyclic hydrocarbon oxidation", Enzyme Microb. Technol., 17, 1014-1020 ;

Torres E., Tinoco R. et Vazquez-Duhalt R. (1996) "Solvent hydrophobicity predicts biocatalytic behaviour of lignin peroxidase and cytochrome C in aqueous solution of water-miscible organic solvents", J. Biotechnol., 49, 59-67;

Torres E., Tinoco R. et Vazquez-Duhalt R. (1998) "Biocatalytic oxidation of polycyclic aromatic hydrocarbons in média containing organic solvents", Water Sci. Technol., 36, 37-44) ;

Vazquez-Duhalt R. (1998) "Hemoproteins as biocatalysts for the oxidation of polycyclic aromatic hydrocarbons", Adv. Bioprocess Engineering II, Eds. E. Galindo et O.T. Ramirez, pages 1183-207;

Torres E. et Vazquez-Duhalt R. (2000) "Chemical Modification of Hemoglobin Improves Biocatalytic Oxidation of PAHs", Biochem. Biophys.Res. Commun., 273, 820-823 ; *erratum* dans Biochem. Biophys.Res. Commun., 275, 713-714;

Torres E., Baeza A. et Vazquez-Duhalt R. (2002) "Chemical modification of heme group improves hemoglobin affinity for hydrophobic substrates in organic media", J. Mol. Catal. B: Enzymatic, 19-20, 437-441).

EP 473 055 décrit un procédé d'élimination des hydrocarbures aromatiques cycliques d'un milieu liquide aqueux. Ce procédé consiste à mettre en contact le milieu liquide avec un agent oxydant et une enzyme immobilisée par liaison covalente ou par formation d'un complexe électrostatique ou hydrophobe afin d'obtenir la précipitation des molécules aromatiques qui sont alors séparées par filtration.

US 6 461 859 décrit un procédé de désulfuration d'un mélange d'hydrocarbures par oxydation au moyen d'une enzyme, immobilisée ou non sur un support, mise en contact avec le mélange d'hydrocarbures, en présence d'un accepteur d'électrons tel que les peroxydes.

Le coût prohibitif de la plupart de ces enzymes, leur faible stabilité en présence de peroxyde d'hydrogène et la difficulté à les utiliser dans des milieux organiques contenant très peu d'eau ou dans des milieux aqueux ne contenant pas de solvant organique ne permettait toutefois pas d'envisager leur utilisation industrielle pour la dégradation des HAP dans des coupes pétrolières ou dans les eaux de rejets. La Demanderesse a donc concentré ses recherches sur une autre protéine, capable de promouvoir des réactions d'oxydation en présence d'un donneur d'oxygène et disponible en grande quantité et à très faible coût. Cette protéine est l'hémoglobine, notamment l'hémoglobine bovine ou ovine, qui peut être récupérée et isolée facilement et de manière connue à partir des déchets d'abattoirs.

Les essais de dégradation oxydative de molécules modèles (anthracène et pyrène) dans un milieu organique (hexadécane, dodécane, propanol) utilisant le peroxyde d'hydrogène en tant qu'agent oxydant et l'hémoglobine bovine native introduite sous forme de poudre lyophilisée ont toutefois été décevants : absence de dégradation du pyrène et décomposition difficile de l'anthracène. Si le milieu organique est totalement anhydre, la réaction d'oxydation de l'anthracène ne se fait pas. Un minimum de 500 ppm d'eau est nécessaire pour que la réaction s'initie. Néanmoins, si la quantité d'eau devient importante (> 0,5 %), l'hémoglobine s'agrège, réduisant les transferts de matière et rendant le milieu réactionnel totalement hétérogène.

La Demanderesse a alors tenté d'utiliser l'hémoglobine sous une forme immobilisée sur un support minéral et a constaté que la fixation de l'hémoprotéine sur ou dans des particules minérales permettait d'obtenir des activités de dégradation intéressantes, même dans des milieux organiques anhydres, ces activités s'avérant en outre relativement moins dépendantes de l'activité en eau du milieu organique à traiter.

Dans des milieux majoritairement ou totalement aqueux, la Demanderesse a en outre observé de façon parfaitement inattendue que la dégradation par oxydation des HAP se faisait plus facilement et plus efficacement en présence d'oxygène moléculaire (O₂), introduit dans le milieu par exemple sous forme d'un simple bullage d'air ou d'oxygène gazeux, qu'en présence d'agents oxydants plus puissants et plus coûteux tels que le peroxyde d'hydrogène et le peroxyde de tertiobutyle, utilisés classiquement jusqu'ici.

La présente invention a par conséquent pour objet un procédé de réduction de la teneur en hydrocarbures aromatiques polycycliques (HAP) d'un milieu liquide **selon la revendication 1.**

Les hydrocarbures aromatiques polycycliques que l'on se propose d'oxyder, entre autres, en aldéhydes, quinones, acides et composés hydroxylés, englobent une famille de composés organiques comportant au moins deux cycles aromatiques, condensés ou non condensés, naturellement présents dans les pétroles ou formés au cours du raffinage de ceux-ci. Comme indiqué ci-dessus, cette famille englobe également les molécules polyaromatiques hétérocycliques, où un ou plusieurs atomes de carbone sont remplacés par des atomes d'azote et/ou de soufre et/ou d'oxygène. Ces hydrocarbures aromatiques polycycliques azotés et/ou soufrés et/ou oxygénés sont, pour un certain nombre d'entre eux, difficiles à détruire par des procédés d'hydrotraitement usuels. Ils pourraient, certes, être dégradés au moins en partie en augmentant la température et la pression des procédés d'hydrotraitement usuels. Cependant de telles unités d'hydrotraitement seraient très coûteuses en énergie et les unités d'hydrotraitement actuelles ne permettent pas de créer de telles conditions de température et de pression. La dégradation de ces HAP par le procédé selon l'invention serait beaucoup moins coûteuse et le procédé selon l'invention pourrait par conséquent être une alternative ou un procédé complémentaire aux procédés d'hydrotraitement connus.

On peut citer à titre d'exemples de HAP éventuellement soufrés et/ou azotés et/ou oxygénés, susceptibles d'être présents dans les produits pétroliers et dans les rejets industriels, le naphtalène, l'acénaphtylène, l'anthracène, le 4,6-diméthyldibenzothiophène, les benzo- et dibenzoanthracènes, le pyrène, les benzo-, dibenzo- et indénopyrènes, le carbazole, le dibenzothiophène, le fluorène, l'acénaphtène, le chrysène, le dibenzofurane, le fluoranthène, le benzofluoranthène, le phénanthrène, le 9-hexylanthacène, le benzopérylène et les dérivés alkylés de ceux-ci.

Le milieu liquide à traiter par le procédé selon l'invention peut être n'importe quel milieu aqueux, organique ou organo-aqueux, liquide à température ambiante, contenant lesdits HAP à l'état partiellement ou totalement dissous. Le milieu liquide peut être une solution homogène ou un milieu liquide hétérogène biphasique ou polyphasique, dont une ou plusieurs phases contiennent des HAP partiellement ou totalement dissous.

L'agent oxydant utilisable dans la présente invention peut être choisi parmi un grand nombre de composés donneurs d'oxygène et ayant un potentiel d'oxydoréduction suffisamment élevé pour oxyder le ou les HAP à dégrader. On peut citer à titre d'exemples d'agents oxydants utilisables, l'oxygène moléculaire (O₂), l'air, l'ozone (O₃), le peroxyde d'hydrogène (H₂O₂), les peroxydes organiques ou minéraux, les alkylhydroperoxydes, les arylhydroperoxydes, les peracides, les persulfates, l'iodosylbenzène et l'hypochlorite. Le peroxyde d'hydrogène peut être associé, par liaison hydrogène, à un agent stabilisant organique tel que l'urée, les dérivés d'urée, l'hexafluoroacétone ou les acides carboxyliques.

Parmi ces agents oxydants, on utilise de manière préférée le peroxyde d'hydrogène, l'hydroperoxyde de tertiobutyle et l'oxygène moléculaire, sous forme pure ou mélangé avec un ou plusieurs gaz inertes, ou encore l'oxygène moléculaire présent dans l'air. L'oxygène moléculaire ou l'air sont des agents oxydants particulièrement intéressants pour la dégradation des HAP en milieu aqueux où ils permettent d'obtenir des résultats supérieurs à ceux obtenus avec le peroxyde d'hydrogène.

Les hémoprotéines utilisables dans la présente invention sont des protéines associées à un noyau de porphyrine complexant un atome de Fe²⁺ ou Fe³⁺ (= groupe hème). Ces hémoprotéines peuvent être d'origine animale (hémoglobine ou myoglobine de boeuf, de mouton, de cheval, de chien, de porc etc.) ou d'origine végétale (leghémoglobine). Ces protéines jouent dans leur environnement naturel un rôle de fixateur et de transporteur d'oxygène. Le mécanisme d'action de ces protéines dans le procédé de la présente invention est encore imparfaitement élucidé. Un certain nombre d'indices permettent de supposer qu'elles ont un rôle enzymatique, favorisant et accélérant, en des quantités infrastoechiométriques, l'oxydation des HAP par l'agent oxydant. Il est toutefois impossible d'exclure pour l'instant d'autres mécanismes réactionnels impliquant plusieurs cycles de réduction stoechiométrique et de régénération oxydative de l'hème. L'utilisation éventuelle de termes tels que « enzymatique », « enzyme » ou « biocatalyseur " pour décrire l'hémoprotéine immobilisée sur ou dans un support minéral selon la présente invention n'entend donc pas limiter la portée de la présente invention à un mécanisme réactionnel particulier.

L'hémoprotéine utilisée dans le procédé de la présente invention doit être immobilisée sur ou dans un support minéral particulaire. Les particules formant ce support peuvent être des particules poreuses ou non poreuses et ont une taille moyenne, déterminée par granulométrie laser, comprise entre 5 nm et 1 mm, de préférence comprise entre 10 nm et 100 µm.

Les particules de support peuvent en principe être en n'importe quel matériau minéral, amorphe, cristallin ou composite, permettant de fixer, de préférence de manière irréversible, une quantité significative d'hémoprotéine. On peut citer à titre d'exemples de tels matériaux minéraux la silice, l'alumine, la zircone et l'oxyde de titane ou des matériaux composites contenant au moins un de ces matériaux. Parmi ces matériaux, on préfère tout particulièrement la silice.

Ces particules peuvent être incorporées, grâce à un liant organique ou minéral, dans des structures de taille supérieure à celles des particules individuelles, de préférence des structures monolithiques poreuses, des membranes, des extrudats ou des comprimés. Ces structures de dimensions plus importantes facilitent de manière connue la séparation de l'hémoglobine d'avec le milieu liquide à traiter et conviennent en particulier pour des procédés de traitement en continu décrits plus en détail ci-après.

La Demanderesse a constaté que la quantité d'hémoglobine qu'il était possible de fixer de manière plus ou moins irréversible sur ou dans le support minéral particulaire pouvait atteindre des valeurs très importantes, allant jusqu'à plusieurs grammes d'hémoprotéine par gramme de support. La fixation de quantités maximales d'hémoprotéine n'est toutefois par forcément souhaitable. En effet, la Demanderesse a constaté que, si l'activité du biomatériau ou du « biocatalyseur » (hémoprotéine + support particulaire) augmente dans un premier temps avec la quantité d'hémoprotéine fixée, elle atteint généralement un plateau où l'adsorption de quantités supplémentaires de protéine ne se traduit plus par une augmentation de l'activité d'oxydation. Dans un souci de limiter les coûts de fabrication des biomatériaux, la quantité d'hémoprotéine fixée dans ou sur le support minéral est de préférence située en deçà de ce plateau d'activité.

A titre indicatif, la quantité d'hémoprotéine immobilisée est de préférence comprise entre 1 et 2000 mg/g de particules minérales, de préférence entre 10 et 200 mg/g de particules minérales.

Comme indiqué ci-dessus, les particules minérales servant de support à l'hémoprotéine, peuvent être poreuses ou non poreuses. Lorsqu'il s'agit de particules non poreuses, on choisira de préférence des particules ayant une grande surface spécifique, autrement dit une faible taille. Dans un mode de réalisation préféré de l'invention les particules minérales sont ainsi des nanoparticules, de préférence des nanoparticules en silice, ayant une taille moyenne, déterminée par granulométrie laser, comprise entre 5 et 900 nm, de préférence entre 10 et 200 nm.

L'immobilisation de l'hémoprotéine se fait alors très facilement par simple adsorption obtenue par mise en contact des nanoparticules avec une solution de l'hémoprotéine, séparation des nanoparticules par une technique de séparation connue, et éventuellement rinçage des particules afin d'éliminer les hémoprotéines fixées réversiblement.

Dans un autre mode de réalisation préféré de l'invention, les particules minérales sont des particules poreuses, comportant de préférence des pores ayant une taille et une ouverture de pore suffisantes pour laisser pénétrer les hémoprotéines (dimensions de l'hémoglobine: 63,82 Å, 95,51 Å et 105,32 Å). Ces pores peuvent communiquer entre eux et former un système de canaux s'étendant à travers la matrice minérale. Le volume poreux des particules minérales est de préférence compris entre 0,05 et 3 mL/g, de préférence compris entre 0,1 et 2 mL/g.

Dans un mode de réalisation particulièrement intéressant, le support minéral est constitué de particules mésoporeuses, c'est-à-dire de particules ayant des pores d'une taille moyenne comprise entre 2 et 50 nm (définition de l'IUPAC).

La synthèse de telles particules, également appelées tamis moléculaire mésoporeux ou silices structurées par des tensioactifs (en anglais *Micelle*-*Templated* Silicas, MTS) est décrite par exemple par Beck et al., dans J. Am. Chem. Soc., 1992, 114, 10834 et V. Chiola et al. US 3 556 725, 1971. Il s'agit d'un procédé de synthèse sol-gel à partir de silice ou d'alcoxysilanes en présence d'agents tensioactifs, par exemple en présence de cétyltriméthylammonium.

L'hémoglobine et la myoglobine peuvent être immobilisées sur ou dans de tels matériaux mésoporeux par simple adsorption à la surface de telles particules et/ou à l'intérieur des pores de celles-ci. Les protéines ainsi immobilisées par simple adsorption sont toutefois soumises à une certaine désorption et l'activité des « biocatalyseurs » peut diminuer avec le temps et le nombre de cycles de récupération.

La Demanderesse a récemment mis au point un nouveau procédé d'immobilisation de protéines par piégeage de celles-ci dans une matrice minérale à base de silice, décrit dans la demande de brevet français n° 04 13119 déposé le 9 décembre 2004, intitulée « Immobilisation de protéines à l'intérieur d'une matrice de silice mésoporeuse par synthèse directe à partir d'alcoxysilanes ». Ce nouveau procédé est un procédé sol-gel basé sur l'hydrolyse et la polycondensation de tétraalcoxysilanes en milieu aqueux en présence de la protéine à immobiliser et se caractérise par la présence, lors de cette réaction de polymérisation, d'une combinaison particulière d'agents tensioactifs, capables de structurer la silice et de lui conférer une porosité contrôlée.

Les enzymes ainsi immobilisées à l'intérieur d'une matrice mésoporeuse à porosité contrôlée présentent d'excellentes activités relatives, une bonne résistance aux conditions réactionnelles, sont faciles à récupérer par simple filtration ou par centrifugation et peuvent ainsi être réutilisées un grand nombre de fois. Les biocatalyseurs obtenus résistent en outre très bien à la désorption ou lixiviation des enzymes.

Le procédé décrit dans la demande de brevet français n° 04 13119 est utilisé avantageusement dans la présente invention pour immobiliser une hémoprotéine choisie parmi l'hémoglobine et la myoglobine, dans la matrice de silice de particules mésoporeuses.

Ce procédé de synthèse d'une silice mésoporeuse avec immobilisation simultanée d'une hémoprotéine dans la matrice de celle-ci, comprend les étapes suivantes consistant
(a) à préparer une solution aqueuse homogène de l'hémoprotéine à immobiliser et d'au moins un agent de stabilisation de la protéine, choisi parmi les composés organiques polyhydroxylés, de préférence les hydrates de carbone,
(b) à préparer une solution alcoolique homogène d'au moins un premier agent tensioactif choisi parmi les phospholipides et d'au moins un deuxième agent tensioactif choisi parmi les agents tensioactifs non-ioniques ou cationiques à chaîne grasse unique en C₈₋₂₄, les sels biliaires et le cholestérol,
(c) à mélanger ces deux solutions de manière à obtenir une solution micellaire ou une solution contenant une mésophase,
(d) à ajouter à la solution obtenue à l'étape (c), sous agitation, au moins un précurseur de silice choisi parmi les tétraalcoxysilanes,
(e) à laisser reposer la solution pendant une durée suffisante pour former des particules solides à base de silice, et
(f) à isoler les particules formées du milieu de synthèse hydroalcoolique.

Dans l'étape (a), l'hémoprotéine est dissoute dans une quantité appropriée d'eau et d'au moins un agent de stabilisation choisi parmi les composés polyhydroxylés. On peut citer à titre d'exemples de tels composés polyhydroxylés, les hydrates de carbone tels que les mono-, di- et polysaccharides, le glycérol, le sorbitol, ou encore les polymères synthétiques polyhydroxylés tels que le poly(alcool vinylique) ou les polymères d'acides carboxyliques insaturés. La Demanderesse a obtenu de bons résultats avec le β-lactose et le glucose.

Parallèlement, on prépare une deuxième solution contenant la combinaison particulière d'agents tensioactifs. Comme indiqué ci-dessus, on utilise l'association d'au moins un premier agent tensioactif choisi parmi les phospholipides et d'au moins un deuxième agent tensioactif (agent co-tensioactif) choisi parmi les agents tensioactifs non-ioniques ou cationiques à chaîne grasse unique en C₈₋₂₄, les sels biliaires et le cholestérol. On peut citer par exemple les amines primaires à chaîne grasse en C₈₋₂₄, les acides aminés à chaîne grasse en C₈₋₂₄, les alkylglucosides à chaîne grasse en C₈₋₂₄ et les (alkyle en C₈₋₂₄)-polyéthylèneglycols. La Demanderesse a obtenu des résultats particulièrement intéressants avec les amines primaires à chaîne grasse saturée comportant de 8 à 24 atomes de carbone.

On peut citer, à titre d'exemples d'amines grasses préférées, la décylamine, la dodécylamine, la tétradécylamine et l'hexadécylamine. Parmi celles-ci la dodécylamine a donné des résultats particulièrement intéressants.

Le terme « phospholipides » englobe les diglycérides phosphatés comportant de préférence un groupe azoté cationique lié au groupe phosphate. On peut citer à titre d'exemple de tels phospholipides, la phosphatidylcholine (souvent appelée lécithine), la phosphatidylsérine et la phosphatidyléthanolamine. Ces phospholipides sont généralement utilisés sous forme de mélanges obtenus à partir de diverses sources naturelles telles que le jaune d'oeuf ou le soja.

La quantité globale de phospholipides et de co-tensioactifs doit être suffisante pour que la concentration globale d'agents tensioactifs dans la solution obtenue dans l'étape (c) soit supérieure à la concentration au-dessous de laquelle les molécules d'agents tensioactifs ne s'assemblent pas en micelles mixtes.

La concentration totale d'agents tensioactifs (phospholipides + co-tensioactif) dans là solution de l'étape (c) est généralement comprise entre 30 et 70 grammes/litre, de préférence entre 35 et 55 grammes/litre.

Le rapport des phospholipides aux agents co-tensioactifs permet de contrôler la taille des micelles et, par conséquent, la taille des pores de la silice mésoporeuse. La Demanderesse a obtenu des porosités satisfaisantes pour un rapport molaire phospholipide/co-tensioactif supérieur ou égal à 1/2, par exemple compris entre 1/1,3 et 1/0,5, de préférence entre 1/0,9 et 1/0,7.

Les quantités respectives des différents composants entrant dans la composition de la solution réactionnelle des étapes (c) - (e) du procédé de la présente invention peuvent être définies plus particulièrement par rapport à la quantité totale de précurseur de silice utilisée.

Ainsi, pour une mole de précurseur de silice (tétraalcoxysilane), on utilise de préférence de 14 à 112 moles d'H₂O, de 0,03 à 0,12 moles d'au moins un disaccharide et de 10⁻⁷ à 10⁻³ moles d'au moins une hémoprotéine pour préparer la solution aqueuse de l'étape (a), et de 0,05 à 0,20 moles d'au moins un phospholipide, de 0,04 à 0,16 moles d'au moins Une amine grasse à chaîne saturée en C₈₋₂₄ et de 8,5 à 34 moles d'au moins un alcool en C₁₋₆, pour préparer la solution alcoolique de l'étape (b).

Le tétraalcoxysilane, précurseur de la matrice silicique, peut en principe être n'importe quel tétraalcoxysilane permettant, par hydrolyse et polycondensation en présence d'eau, la formation d'un réseau de silice (SiO₂). Pour des raisons de disponibilité commerciale, on préfère en particulier les composés de formule Si(O-R₁)₄ où chaque R₁ représente indépendamment un radical alkyle en C₁₋₄, de préférence en C₁₋₂. Le tétraéthoxysilane (TEOS) est le précurseur de silice particulièrement préféré.

Comme indiqué ci-dessus, la dégradation des HAP se fait par mise en contact dudit milieu liquide avec au moins un agent oxydant en présence d'au moins une hémoprotéine immobilisée, dans des conditions réactionnelles permettant l'oxydation des hydrocarbures aromatiques polycycliques éventuellement soufrés et/ou azotés par l'agent oxydant.

La température réactionnelle est de préférence proche de la température ambiante mais la Demanderesse a constaté que l'hémoprotéine, stabilisée par immobilisation sur un support minéral, reste active à des températures relativement plus élevées que la plupart des enzymes connues et il est par conséquent possible de mettre en oeuvre le procédé selon l'invention à des températures allant jusqu'à 80 °C, voire plus.

De préférence, la température réactionnelle de l'étape (a) du procédé de l'invention est comprise entre 15°C et 80°C, en particulier entre 25 et 42 °C.

La durée de mise en contact de l'hémoprotéine avec le milieu liquide contenant les hydrocarbures aromatiques polycycliques est comprise entre 0,2 minutes et 72 heures, de préférence entre 3 minutes et 24 heures, et en particulier entre 3 minutes et 2 heures.

Comme indiqué en introduction, le procédé selon l'invention utilisant des hémoprotéines immobilisées sur un support particulaire minéral est particulièrement intéressant pour traiter des milieux liquides organiques non aqueux, comprenant en particulier moins de 5 % en poids d'eau, de préférence moins de 2 % en poids d'eau, voire même des milieux totalement anhydres. Dans de tels milieux contenant peu ou pas d'eau, l'hémoprotéine immobilisée présente en effet une activité de dégradation des HAP considérablement plus élevée que l'hémoprotéine native. Ceci pourrait être dû à la présence de faibles quantités d'eau dans ou sur le support minéral, ou bien à une conformation plus favorable de la structure secondaire ou tertiaire de la protéine qui rendrait le site actif mieux accessible au substrat et à l'agent oxydant.

Les milieux organiques susceptibles de contenir des teneurs élevées en HAP qu'il s'agit de réduire sont en particulier les coupes de distillation pétrolière, choisies de préférence parmi l'essence, le kérosène et le gasoil.

L'agent oxydant utilisé pour la dégradation des HAP dans les coupes de distillation est de préférence le peroxyde d'hydrogène, éventuellement stabilisé par un agent stabilisant organique, ou encore le peroxyde de tertiobutyle ou l'hydroperoxyde de cumène. Pour des raisons de sécurité évidentes, l'utilisation de l'oxygène moléculaire, sous forme pure ou sous forme d'air, dans des carburants doit en effet être évitée.

Dans un autre mode de réalisation préféré du procédé selon l'invention où le milieu liquide à traiter contient une proportion importante d'eau, de préférence plus de 90 % en poids d'eau, et en particulier plus de 95 % en poids d'eau, l'oxygène moléculaire (O₂) et l'air sont des agents oxydants très intéressants. La Demanderesse a en effet constaté que ces agents oxydants, très peu coûteux et introduits par exemple sous forme d'un simple bullage à travers le milieu liquide, permettent d'obtenir de meilleures activités de dégradation que le peroxyde d'hydrogène.

La mise en contact de l'hémoprotéine avec le milieu liquide se fait par mise en suspension des particules minérales finement divisées, contenant ou portant l'hémoprotéine, dans ledit milieu liquide. La suspension est agitée, de préférence pendant toute la durée de la mise en contact. L'agent oxydant est soit déjà contenu dans le milieu liquide au moment de l'addition de l'hémoprotéine, soit il est introduit en une ou plusieurs fois ou en continu dans la suspension de particules dans le milieu liquide à traiter. A la fin de l'étape de dégradation oxydative, la séparation de l'hémoprotéine immobilisée d'avec le milieu liquide peut se faire par exemple par filtration, sédimentation ou centrifugation de la suspension.

La mise en contact suivie de la séparation des deux phases peut se faire dans le cadre d'un procédé discontinu (par lots) ou continu. Dans le cadre d'un procédé non continu, l'hémoprotéine immobilisée est mise en suspension successivement dans plusieurs lots de milieu liquide à traiter puis séparée de ceux-ci selon des techniques connues. Les lots de milieu liquide à traiter peuvent contenir l'agent oxydant avant l'addition des particules ou bien peuvent recevoir l'agent oxydant en continu ou discontinu après la mise en suspension des particules. Un procédé continu pourrait consister par exemple à mettre en contact l'hémoprotéine immobilisée avec un flux continu de milieu liquide à traiter contenant et/ou recevant l'agent oxydant, puis à séparer l'hémoprotéine immobilisée d'avec le milieu liquide en faisant passer le mélange à travers un dispositif de rétention des particules, de préférence un dispositif de filtration.

Un autre procédé continu de dégradation des HAP, très intéressant du point de vue pratique, consiste à faire passer le milieu liquide à traiter sur une phase stationnaire contenant l'hémoprotéine immobilisée sur ou dans des particules minérales. Cette phase stationnaire peut être par exemple une structure monolithique poreuse, une membrane ou une phase stationnaire particulaire garnissant une colonne. L'agent oxydant est soit déjà contenu dans le milieu liquide à traiter soit introduit dans celui-ci sous forme d'un flux continu, en co-courant ou contre-courant du milieu liquide.

Les produits de dégradation oxydative des HAP n'ont pas forcément besoin d'être séparés du milieu à traiter. En effet, les formes oxydées de ces molécules (aldéhydes, quinones, acides, composés hydroxylés) ont généralement une toxicité moindre, voire nulle, et peuvent même avoir des propriétés intéressantes. Dans certains cas toutefois, notamment dans le cadre d'un traitement biochimique de désulfuration ou de désazotation, il peut être souhaitable d'éliminer les produits de dégradation soufrés ou azotés. Le procédé de l'invention comprend alors une étape supplémentaire (étape (c)) d'élimination des produits de décomposition des hydrocarbures aromatiques polycycliques éventuellement soufrés et/ou azotés. Une telle élimination est possible grâce aux caractéristiques physico-chimiques modifiées des composés oxydés (solubilité, volatilité, polarité) qui permettent leur séparation par dès techniques connues telles que l'extraction, la précipitation, la cristallisation ou l'évaporation.

L'invention est illustrée plus en détail à l'aide des exemples suivants.

### Exemple 1

### Immobilisation d'hémoglobine de boeuf par adsorption sur une silice poreuse

On dissout 500 mg d'hémoglobine de boeuf (Aldrich) dans 10 mL de tampon phosphate (50 mM, pH 6), refroidi par un bain de glace. On ajoute à cette solution 2,6 g de silice poreuse (LiChrospher 60, Merck, volume poreux = 0,85 mL/g, surface spécifique 700 m²/g, diamètre des pores 65 Å) puis, goutte à goutte, 30 mL d'acétone. Après 30 minutes d'agitation sous refroidissement par un bain de glace, on réalise trois cycles de centrifugation/lavage avec 10 mL de solution tampon (50 mM, pH 6). Le biomatériau obtenu contient 11,5 % en poids d'hémoglobine (120 mg d'hémoglobine, dosée par la méthode de Bradford, par gramme de biomatériau).

### Exemple 2

### Dégradation des HAP dans un milieu liquide aqueux

Dans cet exemple, on compare la vitesse de dégradation d'un hydrocarbure aromatique polycyclique modèle, le phénanthrène, par l'oxygène de l'air et par le peroxyde d'hydrogène en présence du biomatériau synthétisé dans l'Exemple 1.

Pour cela, on met en suspension 30 mg du biomatériau de l'Exemple 1 contenant 11,5 % en poids d'hémoglobine dans deux lots de 100 mL d'une solution aqueuse de phénanthrène d'environ 20 µM.

On ajoute au premier lot, au temps to, 5 ml d'une solution de H₂O₂ (20 mM), ce qui correspond à un rapport stoechiométrique H₂O₂/phénanthrène = 50. Le mélange réactionnel est à température ambiante.

Dans le deuxième lot, on met en place au temps t₀ un bullage d'air.

On prélève à des intervalles réguliers de 15 minutes un échantillon de chacune des deux solutions réactionnelles. On filtre les échantillons sur un papier filtre et l'on détermine la concentration de phénanthrène par spectrométrie UV à 250 nm.

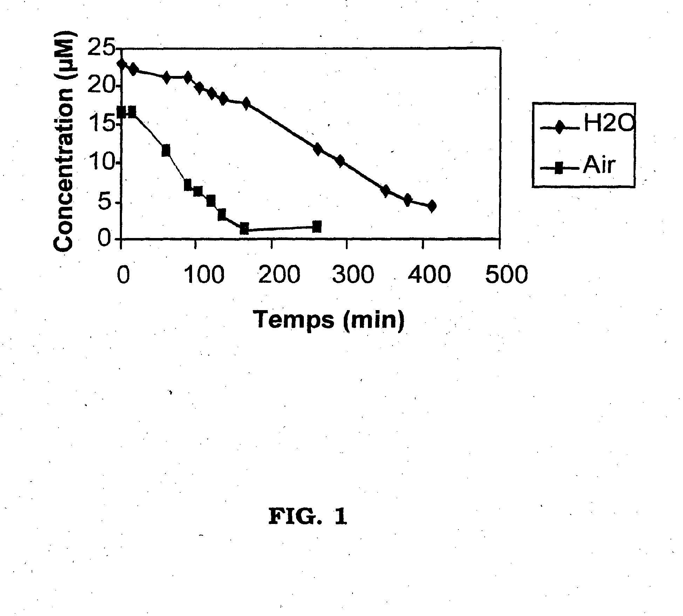

La figure 1 représente la concentration de phénanthrène restant dans la solution réactionnelle en fonction du temps pour le lot 1 (agent oxydant : H₂O₂, ◆) et pour le lot 2 (agent oxydant : air, ■) en fonction de la durée réactionnelle. On constate qu'au bout de deux heures, le phénanthrène a été presque complètement dégradé par l'oxygène de l'air alors que le peroxyde d'hydrogène ne permet qu'une dégradation beaucoup plus lente.

Ces résultats montrent que le procédé selon l'invention permet d'utiliser avantageusement l'oxygène de l'air en tant qu'agent oxydant pour la dégradation d'une molécule modèle des HAP.

### Exemple 3

### Dégradation des HAP dans des eaux de rejet d'une raffinerie

Un test sur les eaux de rejets d'une raffinerie contenant divers HAP a été réalisé. Deux échantillons de 1 litre ont été prélevés sur ces eaux de rejet :
Sur le premier échantillon, l'analyse quantitative de 28 HAP a été réalisée par chromatographie en phase gazeuse couplée à un spectromètre de masse. 18 HAP ont été décelés à une concentration totale de près de 1200 ng/L.
Le second échantillon a été traité pendant 4 heures par bullage d'air en présence de 300 mg de biomatériau de l'exemple 1 sous agitation mécanique par un barreau magnétique. A la fin du traitement le biocatalyseur est séparé par filtration sur un papier filtre sans cendres.

L'échantillon traité ainsi obtenu a été analysé pour évaluer la quantité de HAP résiduels par chromatographie en phase gazeuse couplée à un spectromètre de masse dans des conditions identiques à celles ayant servi à la détermination des concentrations initiales. Les résultats sont reportés dans le Tableau 1 et montrent que le procédé selon l'invention permet d'éliminer presque totalement les HAP initialement présents dans l'eau de rejet.

**Tableau 1**

| Comparatif des dosages des HAP sur les eaux de rejet avant et après traitement selon le procédé de l'invention. | | |
|---|---|---|
| **HAP** | Concentration avant traitement **(ng/L)** | Concentration après traitement **(ng/L)** |
| Naphtalène | 27 | <4 |
| Acénaphtylène | 131 | <4 |
| Acénaphtène | 72 | <4 |
| Fluorène | 49 | <4 |
| Phénanthrène | 31 | < 10 |
| Anthracène | < 4 | < 4 |
| Carbazole | < 4 | < 4 |
| Fluoranthène | 19 | < 10 |
| Pyrène | 248 | < 10 |
| Benzo(a)anthracène | 26 | < 4 |
| Chrysène | 96 | < 10 |
| 5-méthylchrysène | 67 | < 4 |
| 7,12-diméthyl-benzo[a]anthracène | 35 | < 4 |
| Benzo[b+j]fluoranthène | 53 | < 4 |
| Benzo[k]fluoranthène | 28 | < 4 |
| Benzo[e]pyrène | 159 | < 4 |
| Benzo[a]pyrène | 66 | < 4 |
| Dibenzo[a,h]acridine | < 4 | < 4 |
| Dibenzo[a,j]acridine | < 4 | < 4 |
| Dibenzo[ac + ah]anthracène | 20 | < 4 |
| Indéno[1,2,3-cd]pyrène | 19 | < 4 |
| 7H-dibenzo(c,g)carbazole | < 4 | < 4 |
| Benzo(g,h,i)perylène | 68 | < 4 |
| Dibenzo[a,e]pyrène | < 4 | < 4 |
| Dibenzo[a,h]pyrène | < 4 | < 4 |
| Dibenzo[a,i]pyrène | < 4 | < 4 |
| Dibenzo[a,l]pyrène | < 4 | < 4 |

### Exemple 4

### Immobilisation d'hémoglobine de boeuf par adsorption sur une silice mésoporeuse structurée par des tensioactifs

Une silice mésoporeuse structurée par des tensioactifs *(micelle templated silica*, MTS) a été synthétisée de la façon suivante : dans un autoclave de 2 L, on introduit sous agitation, 1140 g d'eau, 21,7 g de pastilles de soude, 72,8 g de bromure de cétyltriméthylammonium et 120,4 g de silice Aerosil^{®}200 (Degussa). Le mélange est agité à température ambiante pendant 30 minutes, puis à 120 °C pendant 80 minutes. La préparation est ensuite filtrée sur un verre fritté et lavée à l'eau jusqu'à neutralité de l'eau de lavage (pH = 7). Le produit est séché à 80 °C pendant la nuit, puis calciné pendant 8 heures sous air à une température de 550 °C. La silice MTS ainsi obtenu présente un volume poreux de 0,73 mL/g, une surface spécifique de 980 m²/g et un diamètre moyen des pores de 37 Å.

On ajoute ensuite à 20 g de silice mésoporeuse MTS ainsi obtenue 400 mL d'une solution d'hémoglobine à 10 mg/mL dans un tampon phosphate (pH 5,8). On refroidit le mélange par un bain de glace à 0 °C et on y ajoute goutte à goutte 600 mL d'acétone. Après 30 minutes d'agitation, le mélange est centrifugé à 3000 rpm pendant 15 minutes. Les culots de centrifugation sont lavés trois fois jusqu'à obtention d'un surnageant limpide. Chaque étape de lavage comprend l'ajout de 10 ml de tampon phosphate (pH 5,8), l'agitation pendant 10 minutes, puis centrifugation pendant 10 minutes à 3000 rpm. Le biomatériau est ensuite séché pendant deux à trois jours dans un dessiccateur sous vide en présence de P₂O₅. Le biomatériau contient 110 mg d'hémoglobine par gramme de biomatériau.

### Exemple 5

### Immobilisation d'hémoglobine de boeuf par adsorption sur des nanoparticules de silice

Dans un récipient, adapté à la centrifugeuse, on ajoute 1 g de silice Aerosil^{®} 200 (Degussa), 200 mg d'hémoglobine bovine (3,1 µmol) et 10 mL de solution tampon phosphate (pH 6, 50 mM). Le mélange est agité à 0 °C pendant 5 min., puis 30 mL d'acétone sont ajoutés goutte à goutte sur une période de 10 min. On poursuit l'agitation du mélange pendant 30 min. à 0°C, puis on centrifugé à 3000 rpm pendant 10 min.

Le culot est lavé et centrifugé 3 fois avec 10 mL de tampon phosphate (pH 6) à 3000 rpm pendant 10 min. à chaque fois. Le produit résultant est ensuite séché sous vide en présence de P₂O₅. Le biomatériau contient 133 mg d'hémoglobine par gramme de biomatériau.

### Exemple 6

### Immobilisation d'hémoglobine de boeuf par synthèse directe (selon la demande de brevet français n°04.13119 déposé le 9 Décembre 2004)

Deux solutions sont préparées dans des erlenmeyers :
Solution 1 : 0,5 g de lécithine d'oeuf et 0,1 g de dodécylamine sont dissous dans 5,16 g d'éthanol absolu.
Solution 2 : 0,15 g de β-D-lactose et 0,15 g d'hémoglobine sont dissous dans 7,2 mL de tampon phosphate (pH 6, 50 mM).

On ajoute goutte-à-goutte la solution 2 dans la solution 1 sous vive agitation pour former une émulsion. Puis on ajoute 1,35 g de tétraéthoxysilane (TEOS). On laisse sous agitation pendant 15 minutes. Le mélange est ensuite laissé au repos pendant 24h. Finalement, la poudre est récupérée par centrifugation et séchée sous vide en présence de P₂O₅. Le biomatériau contient 57 mg d'hémoglobine par gramme de biomatériau.

### Exemple 7

### Dégradation d'anthracène (HAP modèle) dans un milieu organique pur ou partiellement hydratée par les biomatériaux des exemples 1, 4, 5 et 6.

Dans un flacon en verre de 30 mL muni d'un bouchon à vis parfaitement étanche, on introduit 14,19 mg d'hémoglobine native ou une quantité de biomatériau correspondant à 14,19 mg d'hémoglobine immobilisée. On ajoute 4 mL d'un mélange de solvants organiques composé de propanol, d'hexadécane et de dodécane (25/50/25 - v/v/v), de manière à obtenir une concentration en hémoglobine de 55 µM. Après agitation, on ajoute au mélange 80 µL d'une solution d'anthracène à 5 mM dans l'hexadécane de manière à obtenir une concentration finale en anthracène de 100 µM. La réaction d'oxydation de l'anthracène est initiée soit par l'ajout de 6 µL d'une solution aqueuse à 2 M d'agent oxydant, l'hydroperoxyde de *tertio*-butyl (t-BuOOH), afin d'obtenir une concentration finale en t-BuOOH de 3000 µM (la solution contient donc 1500 ppm d'eau (6 µL H₂O dans 4 mL de solvant organique)), soit par l'ajout direct d'hydroperoxyde de tertiobutyle (t-BuOOH) dans le milieu réactionnel.

La composition molaire du milieu réactionnel est donc : 1 Hb / 1,8 HAP / 54,50 t-BuOOH / 0 ou 1500 H₂O.

La réaction est réalisée pendant 24h à 40°C sous agitation (200 rpm). Le mélange réactionnel est séparé du biomatériau par filtration (filtre 0,22 µm), puis analysé par C.L.H.P. sur une colonne de type RP-C₁₈ pour le dosage des produits d'oxydation, puis sur une colonne de type NH₂, pour doser l'anthracène n'ayant pas réagi. La détection se fait par spéctrophotométrie UV-visible.

**Tableau 3**

| Pourcentages de dégradation de l'anthracène, d'anthracène restant et d'anthraquinorie formée après 24 heures de dégradation oxydative d'anthracène dans un mélange organique pur (0 ppm d'eau ajoutée) ou partiellement hydratée (1500 ppm d'eau ajoutée) pour les biomatériaux des différents exemples et pour l'hémoglobine native | | | | |
|---|---|---|---|---|
| Biomatériaux | Eau ajoutée (ppm) | % de dégradation anthracène | % d'anthraquinone formée | % d'anthracène restant |
| Hb native | 0 | 1 | 0,5 | 99 |
| Hb native | 1500 | 11 | 3,2 | 89 |
| Exemple 1 | 1500 | 52 | 39 | 48 |
| Exemple 4 | 0 | 56,6 | 40 | 43,4 |
| Exemple 4 | 1500 | 45 | 42 | 55 |
| Exemple 5 | 1500 | 57 | 40 | 43 |
| Exemple 6 | 1500 | 7 | 4 | 93 |

### Exemple 8

### Dégradation des HAP dans un milieu organique

Cet exemple décrit un essai de dégradation d'un hydrocarbure aromatique polycyclique dans un milieu organique, *a priori* exempt d'eau, en présence d'hémoglobine bovine native et d'hémoglobine bovine immobilisée sur une silice mésoporeuse (biomatériau préparé selon l'Exemple 3).

On prépare deux lots de gasoil Xéol additionnés respectivement de 1 % (5,61 mM, Xéol I) et de 10 % en poids (56,18 mM, Xéol II) d'anthracène. Pour chaque essai, on ajoute à 2 mL de chaque lot de gasoil (Xéol I et II) 55 µM d'hémoglobine native ou une quantité de biomatériau, préparé dans l'exemple 4, équivalente à 55 µM d'hémoglobine, 3 mL (6 µmol) d'une solution aqueuse d'hydroperoxyde de tertiobutyle à 3000 µM, et on laisse la dégradation se dérouler pendant 24 heures sous agitation (200 rpm) à une température de 40 °C.

Au bout de 24 heures, le mélange réactionnel est séparé du biomatériau par filtration sur un filtre de 0,22 µm puis analysé par chromatographie liquide haute performance sur une colonne RP-C18 pour le dosage des produits d'oxydation (anthraquinone), puis sur une colonne de type NH2 pour doser l'anthracène n'ayant pas réagi. La détection se fait par un spectromètre UV-visible. Les concentrations des différents dérivés sont obtenues à partir des courbes étalons réalisées respectivement avec l'anthracène et l'anthraquinone.

Les résultats sont rassemblés dans le Tableau 2 ci-après qui montre que le procédé selon l'invention, utilisant une hémoglobine immobilisée dans un support de silice, permet d'obtenir de meilleurs résultats de dégradation que l'hémoglobine native.

**Tableau 1**

| Concentration en anthraquinone formée des échantillons prélevés après 24 heures de dégradation oxydative d'anthracène dans du gasoil. | | |
|---|---|---|
| | Hémoglobine native | Biomatériau de l'Exemple 3 |
| Xéol I | 69,4 µM | 251 µM |
| (5,61 mM d'anthracène) | (1,2 %) | (4,5 %) |
| Xéol II | 86,3 µM | 542 µM |
| (56,1 mM d'anthracène) | (0,15 %) | (0,97 %) |

## Revendications

1. Procédé de réduction de la teneur en hydrocarbures aromatiques polycycliques (HAP) d'un milieu liquide, lesdits HAP contenant éventuellement, dans leur structure cyclique, un ou plusieurs hétéroatomes choisis parmi N, O et S, comprenant
(a) la mise en contact dudit milieu liquide avec au moins un agent oxydant approprié en présence d'au moins une hémoprotéine, choisie parmi les hémoglobines et les myoglobines, immobilisée sur ou dans des particules solides minérales finement divisées ayant une taille moyenne, déterminée par granulométrie laser, comprise entre 5 nm et 1 mm, de préférence comprise entre 10 nm et 100 µm, dans des conditions réactionnelles permettant l'oxydation des hydrocarbures aromatiques polycycliques éventuellement soufrés et/ou azotés et/ou oxydés par l'agent oxydant, l'hémoprotéine étant fixée par adsorption à la surface des particules et/ou dans les pores de celles-ci, ou l'hémoprotéine étant fixée dans la matrice minérale des particules par piégeage lors du procédé de synthèse par voie sol-gel de celle-ci, la quantité d'hémoprotéine immobilisée sur ou dans les particules minérales étant comprise entre 10 et 200 mg/g de particules minérales et
(b) la séparation de l'hémoprotéine immobilisée d'avec le milieu liquide.

2. Procédé selon la revendication 1, **caractérisé par le fait que** l'agent oxydant est choisi parmi l'oxygène moléculaire (O₂), l'air, l'ozone (O₃), le peroxyde d'hydrogène (H₂O₂), le peroxyde d'hydrogène associé à un agent stabilisant organique, les peroxydes organiques ou minéraux, les alkylhydroperoxydes, les arylhydroperoxydes, les peracides, les persulfates, l'iodosylbenzène et l'hypochlorite.

3. Procédé selon la revendication 1 ou 2, **caractérisé par le fait que** le milieu liquide est un milieu liquide organique comprenant moins de 5 % en poids d'eau, de préférence moins de 2 % en poids d'eau.

4. Procédé selon la revendication 3, **caractérisé par le fait que** le milieu liquide organique est une coupe de distillation pétrolière, choisie de préférence parmi l'essence, le kérosène et le gasoil.

5. Procédé selon la revendication 1 ou 2, **caractérisé par le fait que** le milieu liquide est un milieu liquide aqueux constitué de plus de 90 % en poids d'eau, de préférence de plus de 95 % en poids d'eau.

6. Procédé selon la revendication 5, **caractérisé par le fait que** l'agent oxydant est choisi parmi l'oxygène moléculaire (O₂) et l'air.

7. Procédé selon l'une quelconque des revendications précédentes, **caractérisé par le fait que** la température réactionnelle est comprise entre 15°C et 80°C, de préférence entre 25 et 42 °C.

8. Procédé selon l'une quelconque des revendications précédentes, **caractérisé par le fait que** la durée de mise en contact de l'hémoprotéine avec le milieu liquide est comprise entre 0,2 minutes et 72 heures, de préférence entre 3 minutes et 24 heures, et en particulier entre 3 minutes et 2 heures.

9. Procédé selon l'une quelconque des revendications précédentes, **caractérisé par le fait que** les particules solides minérales finement divisées sont des particules de silice, d'alumine, de zircone ou d'oxyde de titane ou des particules constituées d'un matériau composite contenant au moins un de ces matériaux.

10. Procédé selon la revendication 9, **caractérisé par le fait que** les particules finement divisées sont des particules de silice.

11. Procédé selon l'une quelconque des revendications précédentes, **caractérisé par le fait que** les particules minérales sont des particules poreuses, de préférence mésoporeuses.

12. Procédé selon la revendication 11, **caractérisé par le fait que** les particules minérales poreuses ont un volume poreux compris entre 0,05 et 3 mL/g, de préférence compris entre 0,1 et 2 mL/g.

13. Procédé selon l'une quelconque des revendications 1 à 10, **caractérisé par le fait que** les particules minérales sont des nanoparticules non poreuses ayant une taille moyenne, déterminée par granulométrie laser, comprise entre 5 et 900 nm, de préférence entre 10 et 200 nm.

14. Procédé selon l'une quelconque des revendications précédentes, **caractérisé par le fait que** les particules solides minérales sont intégrées, grâce à un liant organique ou minéral, dans des structures de taille supérieure à celles des particules, de préférence des structures monolithiques poreuses, des membranes, des extrudats ou des comprimés.

15. Procédé selon l'une quelconque des revendications précédentes, **caractérisé par le fait que** la mise en contact de l'hémoprotéine avec le milieu liquide (étape (a)) se fait par mise en suspension, sous agitation, des particules minérales finement divisées, contenant ou portant l'hémoprotéine, dans ledit milieu liquide contenant et/ou recevant l'agent oxydant, et que la séparation de l'hémoprotéine immobilisée d'avec le milieu liquide (étape (b)) se fait par filtration, sédimentation ou centrifugation de la suspension.

16. Procédé selon la revendication 15, **caractérisé par le fait que** le procédé est un procédé non continu comprenant la mise en contact, puis la séparation de l'hémoprotéine immobilisée successivement avec plusieurs lots de milieu liquide à traiter contenant et/ou recevant l'agent oxydant.

17. Procédé selon la revendication 15, **caractérisé par le fait que** le procédé est un procédé continu comprenant la mise en contact de l'hémoprotéine immobilisée avec un flux continu de milieu liquide à traiter contenant et/ou recevant l'agent oxydant, puis la séparation de l'hémoprotéine immobilisée d'avec le milieu liquide par passage du mélange à travers un dispositif de rétention des particules, de préférence un dispositif de filtration.

18. Procédé selon l'une quelconque des revendications 1 à 17, **caractérisé par le fait qu'**il consiste à faire passer le milieu liquide à traiter contenant et/ou recevant l'agent oxydant sur une phase stationnaire contenant l'hémoprotéine immobilisée sur des particules minérales.

19. Procédé selon la revendication 18, **caractérisé par le fait que** la phase stationnaire est une structure monolithique poreuse, une membrane ou une phase stationnaire particulaire garnissant une colonne.

20. Procédé selon l'une quelconque des revendications précédentes, **caractérisé par le fait qu'**il comprend en outre une étape (c) d'élimination des produits de décomposition des hydrocarbures aromatiques polycycliques éventuellement soufrés et/ou azotés et/ou oxygénés.

## Patentansprüche

1. Verfahren zum Verringern des Gehalts an polyzyklischen aromatischen Kohlenwasserstoffen (HAP) in einem flüssigen Milieu, wobei diese HAP eventuell in ihrer zyklischen Struktur ein oder mehrere Heteroatome enthalten, die aus N, 0 und S gewählt sind, enthaltend:
(a) das In-Kontakt-Bringen des flüssigen Milieus mit zumindest einem geeigneten Oxidationsmittel in Anwesenheit zumindest eines Hämoproteins, das gewählt ist aus den Hämoglobinen und den Myoglobinen und das immobilisiert ist auf oder in fein unterteilten festen mineralischen Partikeln, die eine durch Lasergranulometrie ermittelte mittlere Größe haben, die zwischen 5 nm und 1 mm liegt, vorzugsweise zwischen 10 nm und 100 µm, unter Reaktionsbedingungen, die die Oxidation der eventuell geschwefelten und/oder azotierten und/oder oxydierten polyzyklischen aromatischen Kohlenwasserstoffe durch das Oxidationsmittel ermöglichen, wobei das Hämoprotein durch Adsorption an der Oberfläche der Partikel und/oder in deren Poren befestigt ist oder das Hämoprotein in der mineralischen Matrix der Partikel befestigt ist durch Einfangen während des Syntheseverfahrens auf dem Sol-Gel-Weg, wobei die Menge des auf oder in den mineralischen Partikeln immobilisierten Hämoproteins zwischen 10 und 200 mg / g mineralischer Partikel liegt, und
(b) das Trennen des immobilisierten Hämoproteins von dem flüssigen Milieu.

2. Verfahren gemäß Anspruch 1, **dadurch gekennzeichnet, dass** das Oxidationsmittel gewählt ist aus dem molekularen Sauerstoff (O₂), der Luft, dem Ozon (O₃), dem Wasserstoffperoxid (H₂O₂), dem Wasserstoffperoxid in Verbindung mit einem organischen Stabilisationsmittel, den organischen oder mineralischen Peroxiden, den Alkylhydroperoxiden, den Arylhydroperoxiden, den Persäuren, den Persulfaten, dem Iodosylbenzol und dem Hypochlorit.

3. Verfahren gemäß Anspruch 1 oder 2, **dadurch gekennzeichnet, dass** das flüssige Milieu ein organisches flüssiges Milieu ist, das weniger als 5 Gew.-% Wasser enthält, vorzugsweise weniger als 2 Gew.-% Wasser.

4. Verfahren gemäß Anspruch 3, **dadurch gekennzeichnet, dass** das organische flüssige Milieu ein Verschnitt aus der Erdöldestillation ist, das vorzugsweise gewählt ist aus Benzin, Kerosin und Diesel.

5. Verfahren gemäß Anspruch 1 oder 2, **dadurch gekennzeichnet, dass** das flüssige Milieu ein wässriges flüssiges Milieu ist, das aus mehr als 90 Gew.-% Wasser gebildet ist, vorzugsweise aus mehr als 95 Gew.-% Wasser

6. Verfahren gemäß Anspruch 5, **dadurch gekennzeichnet, dass** das Oxidationsmittel gewählt ist aus dem molekularen Sauerstoff (O₂) und der Luft.

7. Verfahren gemäß einem der vorigen Ansprüche, **dadurch gekennzeichnet, dass** die Reaktionstemperatur zwischen 15°C und 80°C liegt, vorzugsweise zwischen 25 und 42°C.

8. Verfahren gemäß einem der vorigen Ansprüche, **dadurch gekennzeichnet, dass** die Dauer des In-Kontakt-Bringens des Hämoproteins mit dem flüssigen Milieu zwischen 0,2 Minuten und 72 Stunden liegt, vorzugsweise zwischen 3 Minuten und 24 Stunden, und insbesondere zwischen 3 Minuten und 2 Stunden.

9. Verfahren gemäß einem der vorigen Ansprüche, **dadurch gekennzeichnet, dass** die fein unterteilten festen mineralischen Partikel Partikel aus Siliziumoxid, aus Aluminiumoxid, aus Zirkoniumoxid oder aus Titanoxid sind oder Partikel, die aus einem Verbundmaterial gebildet sind, das zumindest eines dieser Materialien enthält.

10. Verfahren gemäß Anspruch 9, **dadurch gekennzeichnet, dass** die fein unterteilten Partikel Partikel aus Siliziumoxid sind.

11. Verfahren gemäß einem der vorigen Ansprüche, **dadurch gekennzeichnet, dass** die mineralischen Partikel poröse, vorzugsweise mesoporöse Partikel sind.

12. Verfahren gemäß Anspruch 11, **dadurch gekennzeichnet, dass** die porösen mineralischen Partikel ein Porenvolumen aufweisen, das zwischen 0,05 und 3 ml/g liegt und vorzugsweise zwischen 0,1 und 2 ml/g liegt.

13. Verfahren gemäß einem der Ansprüche 1 bis 10, **dadurch gekennzeichnet, dass** die mineralischen Partikel nicht-poröse Nanopartikel sind, die eine durch Lasergranulometrie ermittelte mittlere Größe haben, die zwischen 5 und 900 nm liegt, vorzugsweise zwischen 10 und 200 nm.

14. Verfahren gemäß einem der vorigen Ansprüche, **dadurch gekennzeichnet, dass** die festen mineralischen Partikel dank eines organischen oder mineralischen Bindemittels in Strukturen integriert sind, deren Größe die der Partikel übersteigt, vorzugsweise poröse monolithische Strukturen, Membrane, Extrudate oder Tabletten.

15. Verfahren gemäß einem der vorigen Ansprüche, **dadurch gekennzeichnet, dass** das In-Kontakt-Bringen des Hämoproteins mit dem flüssigen Milieu (Schritt (a)) geschieht durch Bringen der fein unterteilten mineralischen Partikel, die das Hämoprotein enthalten oder tragen, unter Rühren in Suspension in dem flüssigen Milieu, das das Oxidationsmittel enthält und/oder empfängt, und dass das Trennen des Hämoproteins von dem flüssigen Milieu (Schritt (b)) geschieht durch Filtern, Sedimentieren oder Zentrifugieren des flüssigen Milieus.

16. Verfahren gemäß Anspruch 15, **dadurch gekennzeichnet, dass** das Verfahren ein nichtkontinuierliches Verfahren ist, das das In-Kontakt-Bringen und anschließende Trennen des immobilisierten Hämoproteins aufeinanderfolgend mit mehreren Chargen des zu behandelnden flüssigen Milieus enthält, das das Oxidationsmittel enthält und/oder empfängt.

17. Verfahren gemäß Anspruch 15, **dadurch gekennzeichnet, dass** das Verfahren ein kontinuierliches Verfahren ist, das das In-Kontakt-Bringen des immobilisierten Hämoproteins mit einem kontinuierlichen Fluss des zu behandelnden flüssigen Milieus enthält, das das Oxidationsmittel enthält und/oder empfängt, und dann das Trennen des immobilisierten Hämoproteins von dem flüssigen Milieu durch Hindurchtreten der Mischung durch eine Partikelrückhaltevorrichtung, vorzugsweise eine Filtervorrichtung.

18. Verfahren gemäß einem der Ansprüche 1 bis 17, **dadurch gekennzeichnet, dass** es darin besteht, das flüssige Milieu, das das Oxidationsmittel enthält und/oder empfängt, über eine stationäre Phase hinweglaufen zu lassen, die das an den mineralischen Partikeln immobilisierte Hämoprotein enthält.

19. Verfahren gemäß Anspruch 18, **dadurch gekennzeichnet, dass** die stationäre Phase eine poröse monolithische Struktur, eine Membran oder eine stationäre Partikelphase ist, die eine Säule besetzt.

20. Verfahren gemäß einem der vorigen Ansprüche, **dadurch gekennzeichnet, dass** es weiter einen Schritt (c) des Entfernens der Zersetzungsprodukte der eventuell geschwefelten und/oder azotierten und/oder oxydierten polyzyklischen aromatischen Kohlenwasserstoffe enthält.

## Claims

1. Process for reducing the polycyclic aromatic hydrocarbon (PAH) content of a liquid medium, said PAHs optionally containing, in their cyclic structure, one or more heteroatoms chosen from N, O and S, comprising:
(a) bringing said liquid medium into contact with at least one appropriate oxidizing agent in the presence of at least one haemoprotein, chosen from haemoglobins and myoglobins, immobilized on or in finely divided inorganic solid particles having an average size, determined by laser particle size analysis, of between 5 nm and 1 mm, preferably between 10 nm and 100 µm, under reaction conditions which allow the oxidation of the optionally sulphur-containing and/or nitrogen-containing and/or oxidized polycyclic aromatic hydrocarbons by the oxidizing agent, the haemoprotein being attached by adsorption at the surface of the particles and/or in the pores thereof, or the haemoprotein being attached in the inorganic matrix of the particles by trapping during the process for the sol-gel synthesis thereof, the amount of haemoprotein immobilized on or in the inorganic particles being between 10 and 200 mg/g of inorganic particles and
(b) separating the immobilized haemoprotein from the liquid medium.

2. Process according to Claim 1, **characterized in that** the oxidizing agent is chosen from molecular oxygen (O₂), air, ozone (O₃), hydrogen peroxide (H₂O₂), hydrogen peroxide associated with an organic stabilizing agent, organic or inorganic peroxides, alkyl hydroperoxides, aryl hydroperoxides, peracids, persulphates, iodosylbenzene and hypochlorite.

3. Process according to Claim 1 or 2, **characterized in that** the liquid medium is an organic liquid medium comprising less than 5% by weight of water, preferably less than 2% by weight of water.

4. Process according to Claim 3, **characterized in that** the organic liquid medium is an oil distillation fraction, preferably chosen from petrol, kerosene and diesel oil.

5. Process according to Claim 1 or 2, **characterized in that** the liquid medium is an aqueous liquid medium consisting of more than 90% by weight of water, preferably of more than 95% by weight of water.

6. Process according to Claim 5, **characterized in that** the oxidizing agent is chosen from molecular oxygen (O₂) and air.

7. Process according to any one of the preceding claims, **characterized in that** the reaction temperature is between 15°C and 80°C, preferably between 25 and 42°C.

8. Process according to any one of the preceding claims, **characterized in that** the period of time during which the haemoprotein is brought into contact with the liquid medium is between 0.2 minute and 72 hours, preferably between 3 minutes and 24 hours, and in particular between 3 minutes and 2 hours.

9. Process according to any one of the preceding claims, **characterized in that** the finely divided inorganic solid particles are particles of silica, of alumina, of zirconia or of titanium oxide or particles consisting of a composite material containing at least one of these materials.

10. Process according to Claim 9, **characterized in that** the finely divided particles are silica particles.

11. Process according to any one of the preceding claims, **characterized in that** the inorganic particles are porous particles, preferably mesoporous particles.

12. Process according to Claim 11, **characterized in that** the porous inorganic particles have a pore volume of between 0.05 and 3 ml/g, preferably of between 0.1 and 2 ml/g.

13. Process according to any one of Claims 1 to 10, **characterized in that** the inorganic particles are non-porous nanoparticles having an average size, determined by laser particle size analysis, of between 5 and 900 nm, preferably between 10 and 200 nm.

14. Process according to any one of the preceding claims, **characterized in that** the inorganic solid particles are integrated, through an organic or inorganic binder, into structures having a size greater than those of the particles, preferably porous monolithic structures, membranes, extrudates or tablets.

15. Process according to any one of the preceding claims, **characterized in that** the bringing of the haemoprotein into contact with the liquid medium (step (a)) is carried out by suspending, with stirring, the finely divided inorganic particles containing or bearing the haemoprotein, in said liquid medium containing and/or receiving the oxidizing agent, and that the separating of the immobilized haemoprotein from the liquid medium (step (b)) is carried out by filtration, sedimentation or centrifugation of the suspension.

16. Process according to Claim 15, **characterized in that** the process is a batchwise process comprising the bringing into contact and then the separating of the immobilized haemoprotein successively with several batches of liquid medium to be treated containing and/or receiving the oxidizing agent.

17. Process according to Claim 15, **characterized in that** the process is a continuous process comprising bringing the immobilized haemoprotein into contact with a continuous stream of liquid medium to be treated containing and/or receiving the oxidizing agent, then separating the immobilized haemoprotein from the liquid medium by passing the mixture through a device for retaining the particles, preferably a filtration device.

18. Process according to any one of Claims 1 to 17, **characterized in that** it consists in passing the liquid medium to be treated containing and/or receiving the oxidizing agent over a stationary phase containing the haemoprotein immobilized on inorganic particles.

19. Process according to Claim 18, **characterized in that** the stationary phase is a porous monolithic structure, a membrane or a particulate stationary phase packing a column.

20. Process according to any one of the preceding claims, **characterized in that** it also comprises a step (c) of eliminating the products of decomposition of the optionally sulphur-containing and/or nitrogen-containing and/or oxygen-containing polycyclic aromatic hydrocarbons.
